# EUROPEAN PATENT APPLICATION

(11) **EP 4 388 912 A1**
(43) Date of publication of application: **26.06.2024**
(21) Application number: 22858840.6
(22) Date of filing: 17.08.2022
(51) Int. Cl.: A41H 1/02

(54) **METHOD OF MEASURING THE LINEAR DIMENSIONS OF AN OBJECT ON THE BASIS OF AN IMAGE**

(30) Priority: 19.08.2021 RU 2021124620
(71) Applicant: Limited Liability Company Aiva, Perm Krai, 614013 (RU)
(72) Inventor: YASTREBOV, Alexey Georgievich, Perm Krai, 614094 (RU); SHEVSHELEV, Sergei Viktorovich, Perm Krai, 614000 (RU); DYSHLOV, Vitaly Sergeevich, Perm Krai, 614000 (RU); ORLOVA, Victoria Alekseevna, Leningrad region, 187601 (RU)
(74) Representative: Gevers & Orès
(86) International application number: PCT/RU2022/050252
(87) International publication number: WO 2023/022630

(57) **Abstract**

The invention relates to methods of contactlessly determining the linear dimensions of an object and can be used for determining the anthropomorphic dimensions of parts of a person's body when virtually selecting and ordering clothes online and during the manufacture of the same. A method of measuring the linear dimensions of an object comprises: capturing a set of images of a measured object from different perspectives, while placing a reference object with known dimensions and of a known shape in the frame such that the dimensions are readable from the image; and processing the images with a computational algorithm. The technical effect consists in increasing the accuracy of contactless determination of the linear dimensions, increasing the speed of obtaining the measurement result by the use of computer vision algorithms and neural network techniques for analyzing the images without human involvement in the process of determining the dimensions of object being measured, and thereby eliminating the occurrence of errors that could be caused by human inattention.

## Description

The invention relates to methods of contactless determination of the linear dimensions of an object and can be used for determining the anthropomorphic dimensions of parts of person's body when virtually selecting and ordering clothes online and during the manufacture of the same.

JP2017101356 (IPC: A41H1/02, published 08.06.2017), considered to be the closest prior art, discloses a size-measuring method comprising capturing a set of user's images, including at least one of the front and rear view, and a side view of the user. Actual dimensions are determined based on the dimensions of a reference object placed such that the dimensions are readable from the set of images and are used as a reference for the dimensions in said images. By doing so, every part of the user's body can be measured from a simply captured image, and this greatly reduces the time spent by the user when making clothes. Moreover, the measurements do not require special knowledge or skills, and special or expensive tools. However, the disadvantage of the known method is that the method involves human-to-detect measurement points on the image, the measurement points can be in different planes relative to each other, which can reduce the accuracy of measurements due to the errors introduced at manual processing of the images. In addition, the measurements require a second person or special equipment to capture the images.

The technical effect achieved by the claimed method consists in increased accuracy of contactless determination of the linear dimensions, increased speed of obtaining the measurement result by the use of computer vision algorithms and neural network techniques for analyzing the images without human involvement in the process of determining the object dimensions, and thereby eliminating the occurrence of errors that could be caused by human inattention.

The technical effect is achieved by capturing an image of an object being measured together with a reference object ; images are captured by a mobile device from different perspectives, for example, from above and from the side, to determine the width and length of the object, respectively; the images are electronically transferred to a server to a computational algorithm; then computer vision algorithms and an artificial neural network sequentially detect, on each image, outlines of the measured and reference objects, said detection including finding the coordinates of extreme points of the outline of the reference object, and a projective transformation is performed to determine actual dimensions of the measured object, taking into account perspective distortions of the frame.

Projective transformation refers to a formula for transforming apparent dimensions of an object in a frame into its actual dimensions, taking into account that the objects farther away have smaller apparent dimensions. Projective transformation eliminates distortion in the object's size visualization, which occurs when the camera is positioned at an arbitrary angle to the object.

The claimed method is performed sequentially. Using a mobile phone with software installed therein, an image is captured such that the measured and reference objects fall into a frame; images are captured from different perspectives, for example, from above and from the side, to determine the object's width and length, respectively. The resulting images are transferred to a server, where they are sequentially processed. Images are processed by computer vision methods using an artificial neural network; the processing comprises: detecting a pixel mask and outline of the reference object; approximating the outline with a polygon; determining corner points, then detecting a pixel mask and outline of the object being measured; determining extreme points of the outline of the reference object of the known size and shape, and then, using projective transformation, determining physical dimensions of the object being measured taking into account the perspective distortions caused by the arbitrary position of the camera at capturing. As the result of the method, one dimension (length or width) of the measured object is determined for one original image. The measurement result is displayed on the user's mobile phone used to capture the images.

Information about reference objects of the known size and shape is contained in a database of reference object sizes, which is automatically accessed by the algorithm so that no operator involvement is required.

The following features are common to the invention and the closest prior art: the step of measuring the linear dimensions of the object includes capturing an image or a set of images of the measured object at different perspectives, while placing in the frame a reference object with known dimensions such that the dimensions are readable from the images; processing the images by a computational algorithm, and calculating the actual size of the measured object.

The following features distinguish the invention from the closest prior art:
(1) In the prior art method, images of a person with a reference object attached are captured such that dimensions of the reference object in the vertical and horizontal directions can be determined from the said images. Also, if a state standard card is used as the reference object, it is placed such that one of the sides is oriented horizontally and the other vertically. Then, the method of measuring the image scale comprises calculating the ratio of actual sizes of the sides of the reference object to the apparent sizes of its sides in the image. Such method of determination of the dimensions poses restrictions on the angle of capture and the position of the reference object in the frame, since the angle and the perspective distort the size obtained in the image. Therefore, to accurately calculate dimensions of a human body, the reference object must be positioned in a plane that is strictly perpendicular to the axis of view of the camera.
   In contrast to the prior art, the present method involves detecting outlines and characteristic points (e.g., corners) of the reference object. Then, taking into account the known shape of the reference object (rectangle, circle, etc.), information about which is stored in a database of reference objects on the server, a projective transformation is performed to compensate for the distortions caused by the frame perspective. This, in turn, allows capturing the images with a camera positioned at an arbitrary angle to the reference object and the object being measured.
(2) In the prior art method, distances between the measurement points (e.g., the points of shoulder apexes, etc.) are calculated to measure the human body dimensions necessary for the manufacture of clothing. The measurement points in the image can be located by a person. This step of processing the images takes a lot of time and, due to direct human involvement, can cause errors in determining the location of measurement points and further appearance and accumulation of errors in calculation of the dimensions of person body parts.

In contrast to the prior art, the present method provides fully computerized measuring of dimensions of an object of interest, for example, any part of human body, by performing the following steps:
a) Computerized detection of outline of the human body part by analyzing all outlines in the image and selecting the largest outline within the frame;
b) Computerized detection of exact pixel mask of the human body part by processing the detected outline by an artificial neural network;
c) Computerized refinement of the outline by analyzing the detected exact pixel mask of the human body part;
d) Computerized detection of measurement points on the outline of the human body part;
e) Computerized calculation of actual dimensions of the human body part, taking into account the perspective distortions in the frame, caused by the camera position at an arbitrary angle to the object being measured.

Thus, the present method reduces human involvement in determining the dimensions of a body part to the step of capturing the images, while the subsequent steps of image analysis and calculations are carried out automatically by computer vision algorithms using an artificial neural network, which increases the accuracy of determining the actual dimensions of the measured object, reduces the image processing time, and eliminates errors caused due to the presence of the human factor.

The method of measuring the linear dimensions of an object to be measured from the joint image of the object being measured and the reference object comprises:
1. Creating a scene to capture an image suitable for further calculations.
2. Transferring the captured image electronically to a computational algorithm.
3. Executing the computational algorithm for determining the actual dimension of the object being measured:
   3.1. Detecting the area of the reference object in the image.
   3.1.1. Processing the image to improve contrast and reduce noise.
   3.1.2. Detecting outlines of contrasting objects in the image.
   3.1.3. Detecting outline of the reference object based on its geometric features (shape, size).
   3.1.4. Calculating coordinates of circumscribing area for the outline of the reference object and expanding the same.
   3.2. Determining apparent dimensions of the reference object in the image.
   3.2.1. Detecting and identifying the reference object inside the detected rectangular area and detecting its pixel mask using a network of U2-Net type.
   3.2.2. Detecting outline of the detected pixel mask of the reference object.
   3.2.3. Approximating the outline of the pixel mask of the reference object with a suitable geometric figure circumscribing the shape of respective type of reference objects (e.g., rectangle, ellipse).
   3.2.4. Detecting characteristic points on the outline that circumscribe the apparent size of the reference object.
   3.3. Detecting in the image the object to be measured.
   3.3.1. Removing the reference object from the image by filling its area with uniform color.
   3.3.2. Detecting the measured object in the image and detecting its pixel mask using a network of U2-Net type.
4. Detecting extreme points on the outline of the mask of the object being measured, the distance between which allows determining the measured size of the object from the given perspective.
5. Calculating geometric parameters of the scene taking into account the perspective based on known physical and calculated apparent dimensions of the reference object, using the library of reference object parameters and projective transformation.
6. Calculating physical dimension of the object being measured on the basis of the calculated geometric parameters of the scene and the determined apparent dimensions of the object measured.
7. Obtaining, as the result of the algorithm, one dimension (length or width) of the measured object for one original image.

The invention is illustrated by the drawings and an exemplary embodiment.

Fig. 1 is an example of placing a reference object 1 (A4 paper sheet as an example) in a frame (original image) and an object 2 to be measured (human foot as an example), view from above.

Fig. 2 is an exemplary original image with a reference object 1 and a measured object 2, side view.

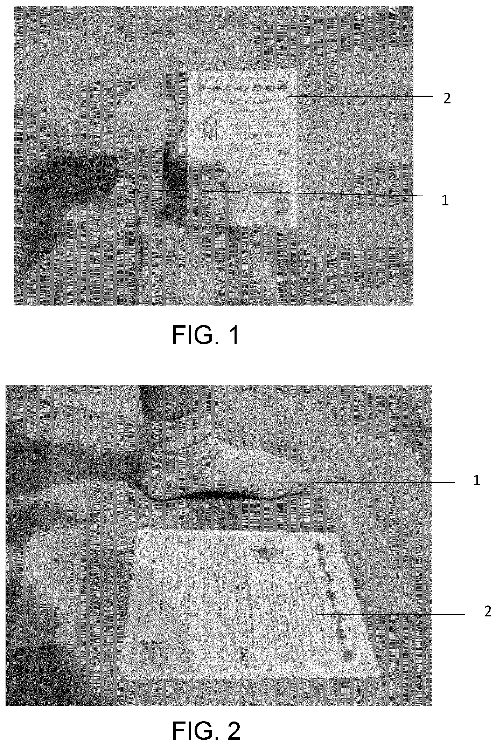

An exemplary embodiment of the present method. Using a mobile phone with a camera, multiple images of the dorsum of a foot were successively captured from above (Fig. 1) and from the side (Fig. 2). At the same time, a reference object 1, such as A4 paper sheet of 29.7 x 21.0 cm in size, was placed near the measured object 2 (the foot) in the frame. The captured images were subjected to sequential computer processing in accordance with the present method, using computer vision algorithms and an artificial neural network. The processing included: automatically detecting a mask and outline of the paper sheet; approximating the outline with a rectangle, for which corner points were detected. Mask and outline of the foot were similarly detected, and extreme points of the outline (for top and side view) were detected using computer vision algorithms. Next, projective transformation of the extreme points of the sheet and the foot from the image plane was performed, the distance between the projected points was measured, and actual physical dimensions of the human foot: length and width (27.2 and 10.0 cm, respectively) were measured.

The resulting length and width of the foot can be converted to standard shoe sizes, greatly facilitating footwear selection.

## Claims

1. A method of measuring the linear dimensions of an object, comprising: capturing a set of images of an object to be measured from the front or back, or from above, and a side view, while placing a reference object with known dimensions and of a known shape in the frame such that the dimensions are readable from the image; processing the images with a computational algorithm; and calculating the actual dimension of the object being measured, **characterized in that:** the captured images are electronically transferred to a server to the computational algorithm; each image is sequentially processed with computer vision algorithms and an artificial neural network, said processing including: detecting a pixel mask and outline of the reference object; approximating the outline with a polygon, and then detecting a pixel mask and outline of the object being measured; detecting extreme points of the outline of the measured and reference objects; and using a projective transformation, determining physical dimensions of the measured object taking into account the perspective distortions and based on the determined apparent dimensions of the object being measured.
